(19) 

Europäisches
Patentamt
European
Patent Office
Office européen
des brevets

(11) **EP 3 249 607 A1**

(12) **EUROPEAN PATENT APPLICATION**

(43) Date of publication:
**29.11.2017 Bulletin 2017/48**

(51) Int Cl.:
*G06T 5/50* (2006.01)   *G06T 7/77* (2017.01)

(21) Application number: **17152334.3**

(22) Date of filing: **26.01.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **28.01.2016 EP 16305079**

(71) Applicant: **Thomson Licensing
92130 Issy-les-Moulineaux (FR)**

(72) Inventors:
• **HU, Wei
  35576 CESSON-SEVIGNE (FR)**
• **REINHARD, Erik
  35576 CESSON-SEVIGNE (FR)**
• **SEIFI, Mozhdeh
  35576 CESSON-SEVIGNE (FR)**

(74) Representative: **Aumonier, Sebastien
TECHNICOLOR
1-5, rue Jeanne d'Arc
92130 Issy-les-Moulineaux (FR)**

(54) **METHOD FOR OBTAINING A POSITION OF A MAIN LENS OPTICAL CENTER OF A PLENOPTIC CAMERA**

(57)   In one embodiment of the disclosure, it is proposed a method for obtaining a position of a main lens optical center of a plenoptic camera comprising a micro-lens array (MLA) positioned in front of a sensor, the main lens optical center position being defined in a referential relative to the sensor. Such method is remarkable in that it comprises:
-obtaining, from a 4D raw light-field data of a monochromatic scene, a set of symmetry axes, each symmetry axis of the set being defined as a line associated with a micro-image, the line passing in the neighborhood of the micro-image center coordinates of the micro-image it is associated with, and in the neighborhood of the brightest pixel in the micro-image it is associated with, the set comprising at least two symmetry axes;
-determining the position of the main lens optical center according to at least two symmetry axes of the set.

4D raw Light Field data          Set of micro-images centers

401
Symmetry lines detection step

402
Combination of the obtained lines
either via the intersection of these
lines, or via the solving of an
optimization problem

Estimated
optical
center

**FIG.4**

EP 3 249 607 A1

**Description**

Technical Field

The disclosure relates to 4D light field data processing. More precisely, the disclosure relates to a technique for obtaining the position of a main lens optical center of a plenoptic camera directly from 4D raw light field data of a monochromatic scene.

Background

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

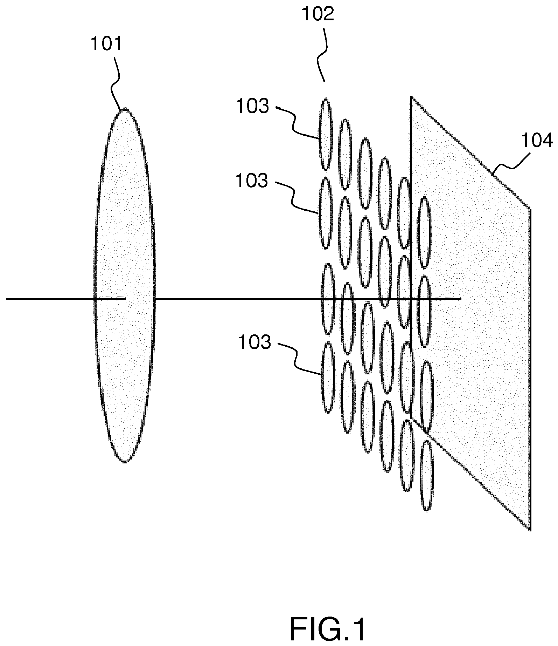

The acquisition of 4D light-field data, which can be viewed as a sampling of a 4D light field (i.e. the recording of light rays as explained in Figure 1 of the article:" Understanding camera trade-offs through a Bayesian analysis of light field projections" by Anat Levin et al., published in the conference proceedings of ECCV 2008) is an hectic research subject.

Indeed, compared to classical 2D images obtained from a camera, 4D light-field data enable a user to have access to more post processing features that enhance the rendering of images and/or the interactivity with the user. For example, with 4D light-field data, it is possible to perform with ease refocusing of images a posteriori (i.e. refocusing with freely selected distances of focalization meaning that the position of a focal plane can be specified/selected a posteriori), as well as changing slightly the point of view in the scene of an image. In order to acquire 4D light-field data, several techniques can be used. Especially, a plenoptic camera, as depicted in document WO 2013/180192 or in document GB 2488905, is able to acquire 4D light-field data.

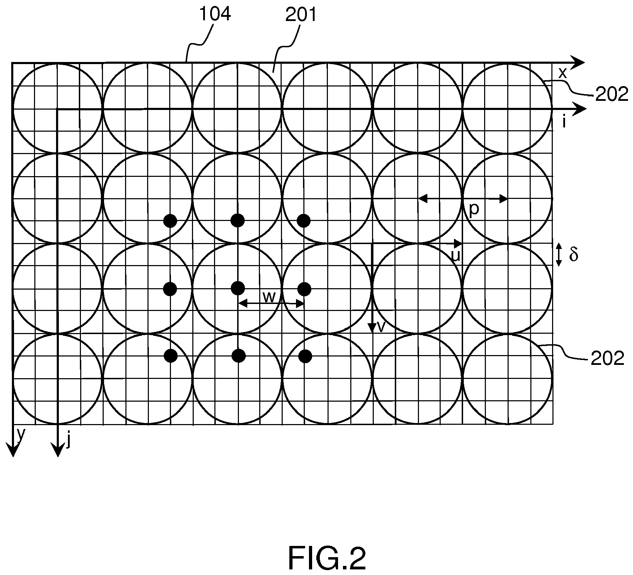

In the state of the art, there are several ways to represent (or define) 4D light-field data. Indeed, in the Chapter 3.3 of the Phd dissertation thesis entitled "Digital Light Field Photography" by Ren Ng, published in July 2006, three different ways to represent 4D light-field data are described. Firstly, 4D light-field data can be represented, when recorded by a plenoptic camera as the one depicted in Figure 1 for example, by a collection of micro-images (see the description of Figure 2 in the present document). 4D light-field data in this representation are named raw images (or 4D raw light-field data). Secondly, 4D light-field data can be represented, by a set of sub-aperture images. A sub-aperture image corresponds to a captured image of a scene from a point of view, the point of view being slightly different between two sub-aperture images. These sub-aperture images give information about the parallax and depth of the imaged scene. Thirdly, 4D light-field data can be represented by a set of epipolar images (see for example the article entitled : "Generating EPI Representation of a 4D Light Fields with a Single Lens Focused Plenoptic Camera", by S. Wanner et al., published in the conference proceedings of ISVC 2011).

One of the most common problems with the use of plenoptic cameras concerns the calibration of these devices. Indeed, usually, the goal of a calibration process is to obtain accurate values/estimations of some parameters of a plenoptic camera such as tilt angle, corner crops, main lens distance from the micro-lens array, sensor distance from the micro-lens array, and micro-image size, as explained in document US2013127901. Another parameters that are usually obtained via a calibration process are the center point locations of each micro-image. For example a technique for obtaining the center point locations of each micro-image is described in the article entitled: "Modeling the calibration pipeline of the Lytro camera for high puality light-field image reconstruction" by Donghyeon Cho et al, or in the article entitled: "Calibration of a Microlens Array for a Plenoptic Camera" by Chelsea M. Thomason et al.

In the calibration of conventional cameras, the optical center of a camera lens is usually also subject to a calibration process. Indeed, the optical center by definition is the point at which the optical axis of the lens intersects with the image plane. At the center of the lens, light doesn't bend as it goes through the lens. For camera lenses composed of multiple simple lenses, the optical center is the imaged point through which there is no light refraction when the lenses are treated as a single thin lens functionally.

Optical center is one of the main camera parameters that need to be calibrated for computer vision applications and image modeling. Camera calibration finds intrinsic parameters of the camera (including the optical center) which in return affect all of the imaging post-processing applications. Also, modeling imaging properties such as vignetting and radial lens distortion requires the position of the optical center, because they are often radially symmetric about the optical center due to the radial symmetry of the circular lenses.

Nevertheless, the position of the optical center is seldom provided by camera manufacturers. Various approaches have been proposed for optical center estimation for conventional cameras. One category of methods estimate the optical center via a general camera calibration procedure that also determines other camera parameters (see for example the article entitled "New Technique for Finding the Optical Center of Cameras" by Guruprasad Shivaram and Guna Seetharaman). This category is named direct calibration category. Another category estimates the optical center by locating the center of an optical effect such as vignetting and radial lens distortion. This category is named radial alignment category. It should be noted that in practice, the true optical center is hardly aligned with the numerical center of the image coordinates. The difference could be as large as 30-40 pixels.

Direct calibration, as its name implies, estimates the optical center using a general camera calibration procedure that also estimates other camera parameters. Some of these methods require a particular calibration pattern or scene, while others perform self-calibration using image sequences captured with fixed camera settings.

On the other hand, the radial alignment method takes advantage of the fact that the optical center is aligned with the center of an optical effect such as vignetting, radial lens distortion, vanishing point and focus/defocus, due to the radial symmetry of the lens. These techniques generally require specific calibration scenes or instruments, such as a uniform scene, a special calibration target, a high-frequency textured pattern, etc. For example, the technique described in the article entitled: "Single-Image Optical Center Estimation from Vignetting and Tangential Gradient Symmetry" by Y. Zheng, C. Kambhamettu and S. Lin, and published in the proceedings of the IEEE Conference on Computer Vision and Pattern Recognition, pp. 2058-2065, 2009, determines the optical center by identifying the center of the vignetting effect in a single image.

However, the existing estimation methods are dedicated to conventional cameras. Indeed, there is no work on the optical center estimation for a plenoptic camera.

The present disclosure relates to a technique for obtaining the position of the main lens' optical center of a plenoptic camera during a calibration process.

It is important to obtain an accurate estimation of position of the main lens' optical center of a plenoptic camera due to the fact that this parameter can be used for determining vignetting and lens distortion, which are radially symmetric about the optical center in a plenoptic camera. Consequently, it enables a variety of post-processing applications from captured plenoptic images. Examples include 3D depth estimation, refocusing, increasing the dynamic range of the plenoptic data, etc. For example, in the article entitled "Light field panorama by a plenoptic camera" by Zhou Xue et al., it is necessary to have the position (or coordinates) of the main lens's optical center for performing light field stitching to increase the size of the acquired light field data (assuming the camera motion is known (i.e. the camera translation or camera translation and rotation)). Another example of the use of the main lens' optical center of a plenoptic camera is depicted in the article "A light transport framework for lenslet light field cameras" by C. K. Liang and R. Ramamoorthi, published in in ACM Transactions on Graphics, February 2015, vol. 34, no.2, pp. 16:1-16:19.

Summary of the disclosure

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure is directed to a method for obtaining a position of a main lens optical center of a plenoptic camera comprising a micro-lens array (MLA) positioned in front of a sensor, said main lens optical center position being defined in a referential relative to said sensor. Such method is remarkable in that it comprises:

- obtaining, from a 4D raw light-field data of a monochromatic scene, a set of symmetry axes, each symmetry axis of said set being defined as a line associated with a micro-image, said line passing in the neighborhood of the micro-image center coordinates of the micro-image it is associated with, and in the neighborhood of the brightest pixel in said micro-image it is associated with, said set comprising at least two symmetry axes;
- determining the position of the main lens optical center according to at least two symmetry axes of said set.

Hence, the proposed disclosure uses the symmetry property of micro-images in order to determine the optical center. Indeed, the vignetting of the main lens is dominant and is imaged by each micro-lens. Taking advantage of the symmetry property of vignetting in micro-images captured for a monochromatic scene (so-called monochromatic images), it is possible to estimate the optical center of a plenoptic camera.

In one embodiment of the disclosure, the monochromatic scene corresponds to a white scene.

In another embodiment of the disclosure, the monochromatic scene corresponds to a grey scene.

In fact, the intensity of monochromatic scenes has no effect on the proposed optical center estimation as long as the scene is not black (black means the intensity is 0, i.e., no information). In one embodiment of the disclosure, the intensity of the monochromatic scene is normalized to a range [0,1] anyway.

In one embodiment of the disclosure, the method for obtaining is remarkable in that said neighborhood of the micro-image center coordinates and said neighborhood of the brightest pixel are defined according to Euclidian distance metric and a threshold. Such embodiment is not described explicitly in the description, however, from the examples and teachings provided in the present disclosure, one skilled in the art could implement such variant.

In one embodiment of the disclosure, the method for obtaining is remarkable in that said line is passing through the micro-image center coordinates of the micro-image it is associated with, and through the brightest pixel in said micro-image it is associated with.

In one embodiment of the disclosure, the method for obtaining is remarkable in that it comprises determining said set of symmetry axes, said determining comprising, for a given micro-image $I_k$ having micro-image center coordinates $\left(c_x^k, c_y^k\right)$:

- obtaining the $M$-brightest pixels $\{p_m\}_{m=1}^{M}$ comprised in $I_k$, $M$ being an integer greater than one;
- obtaining $M$ lines, each line being defined as passing through one of said $M$ brightest pixels and said micro-image center coordinates $\left(c_x^k, c_y^k\right)$;
- determining, for each of said $M$ lines, a number of symmetric pixel pairs $s_n$;
- adding in said set of symmetry axes, the line having the largest number of symmetric pixel pairs $s_n$ among the $M$ values of number of symmetric pixel pairs $s_n$.

In one embodiment of the disclosure, the method for obtaining is remarkable in that said determining, for each of said $M$ lines, is done for $2.M-1$ lines, said $2.M-1$ lines comprising said $M$ lines and $M-1$ interpolated lines, an interpolated line passing through the micro-image center coordinates $\left(c_x^k, c_y^k\right)$ and a point comprised in said micro-image $I_k$, said point being further comprised in a region having for border two of said $M$ lines.

In one embodiment of the disclosure, the method for obtaining is remarkable in that $M$ is greater than five.

In one embodiment of the disclosure, the method is remarkable in that said symmetric pixel pairs are identified according to a predominant gradient direction of pixels.

In one embodiment of the disclosure, the method is remarkable in that said predominant gradient direction of pixels is obtained via the estimation of a structure tensor.

In one embodiment of the disclosure, the method is remarkable in that it comprises removing lines that are outside a circle centered on the center of the 4D raw light-field data, and having a radius $R$ of pixels, where $R$ is an integer smaller than 40.

In one embodiment of the disclosure, the method is remarkable in that it comprises determining said set of symmetry axes, said determining comprising, for a given micro-image $I_k$:

- applying an interpolation method on said micro-image $I_k$ delivering an high-resolution micro-image;
- determining line parameters $a, b, c$ defining an equation line $ax + by + c = 0$ that minimize a sum of first and a second element, the first element being a square difference between said micro-image $I_k$ and sub-sampled said high-resolution micro-image, and the second element being a measure of symmetry of said high-resolution micro-image with regards to the line with parameters $a, b, c$.

In one embodiment of the disclosure, the method for obtaining is remarkable in that said determining, for a given micro-image $I_k$ further comprises verifying that a distance between the 4D raw light-field data center and said line with parameters $a, b, c$ is no larger than $R$ pixels.

In one embodiment of the disclosure, the method for obtaining is remarkable in that said determining the position of the main lens optical center is done as a function of an intersection of at least a part of the symmetry axes of said set.

In one embodiment of the disclosure, the method for obtaining is remarkable in that said determining the position of the main lens optical center is done by minimizing a weighted sum of distances between each of said symmetry axis and unknown main lens optical center coordinates $(x_o, y_o)$ of said plenoptic camera.

In one embodiment of the disclosure, the method for obtaining is remarkable in that only micro-images positioned at the periphery of the 4D raw light-field data are used for obtaining said set of symmetry axes.

In one embodiment of the disclosure, the method for obtaining is remarkable in that at least 25% of the micro-images comprised in the 4D raw light-field data are used for obtaining said set of symmetry axes.

In one embodiment of the disclosure, the method for obtaining is remarkable in that all the micro-images comprised in the 4D raw light-field data are used for obtaining said set of symmetry axes.

Hence, the proposed method can be used for the evaluation of prototype plenoptic camera designs, as well as for post-manufacture calibration serving a variety of applications such as light field TV display and relevant mobile applications.

According to an exemplary implementation, the different steps of the method are implemented by a computer software program or programs, this software program comprising software instructions designed to be executed by a data processor of a relay module according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory")*, for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more sub-programs of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware etc. In a variant, the hardware component comprises a processor that is an integrated circuit such as a central processing unit, and/or a microprocessor, and/or an Application-specific integrated circuit (ASIC), and/or an Application-specific instruction-set processor (ASIP), and/or a graphics processing unit (GPU), and/or a physics processing unit (PPU), and/or a digital signal processor (DSP), and/or an image processor, and/or a coprocessor, and/or a floating-point unit, and/or a network processor, and/or an audio processor, and/or a multi-core processor. Moreover, the hardware component can also comprise a baseband processor (comprising for example memory units, and a firmware) and/or radio electronic circuits (that can comprise antennas) which receive or transmit radio signals. In one embodiment, the hardware component is compliant with one or more standards such as ISO/IEC 18092/ ECMA-340, ISO/IEC 21481/ ECMA-352, GSMA, StoLPaN, ETSI /SCP (Smart Card Platform), GlobalPlatform (i.e. a secure element). In a variant, the hardware component is a Radio-frequency identification (RFID) tag. In one embodiment, a hardware component comprises circuits that enable Bluetooth communications, and/or Wi-fi communications, and/or Zigbee communications, and/or USB communications and/or Firewire communications and/or NFC (for Near Field) communications.

In one embodiment, software and/or hardware modules are comprised in a plenoptic camera, or in a mobile phone (or a tablet) being able to capture 4D raw light-field data.

It should also be noted that a step of obtaining an element/value in the present document can be viewed either as a step of reading such element/value in a memory unit of an electronic device or a step of receiving such element/value from another electronic device via communication means.

In another embodiment, it is proposed an electronic device for obtaining a position of a main lens optical center of a plenoptic camera comprising a micro-lens array (MLA) positioned in front of a sensor, said main lens optical center position being defined in a referential relative to said sensor. Such electronic device is remarkable in that it comprises:

- a module configure to obtain, from a 4D raw light-field data of a monochromatic scene, a set of symmetry axes, each symmetry axis of said set being defined as a line associated with a micro-image, said line passing in the neighborhood of the micro-image center coordinates of the micro-image it is associated with, and in the neighborhood of the brightest pixel in said micro-image it is associated with, said set comprising at least two symmetry axes;
- a module configured to determine the position of the main lens optical center according to at least two symmetry axes of said set.

Brief description of the drawings

The above and other aspects of the invention will become more apparent by the following detailed description of exemplary embodiments thereof with reference to the attached drawings in which:

- Figure 1 presents schematically the main components comprised in a plenoptic camera that enables the acquisition of light field data on which the present technique can be applied;
- Figure 2 presents an image captured by a sensor array of Figure 1;
- Figure 3 presents how the optical center and each micro-image center lie on a line. The symmetry axes of all the micro-images intersect at the optical center;
- Figure 4 is a flowchart that roughly depicts the main steps of the method for estimating the optical center position of a plenoptic camera, according to one embodiment of the disclosure;
- Figure 5 emphasizes on the main steps of the detection step mentioned in Figure 4;
- Figure 6 emphasizes on the main steps of the interpolation step mentioned in Figure 5;
- Figure 7(a) is a flowchart of the symmetric pixel pair identification from structure tensor used in one embodiment of the disclosure;
- Figure 7(b) is an illustration of the construction of 3x3 windows around pixel i and pixel j respectively;
- Figure 8 is a flowchart that depicts the main step of the symmetry lines/axes detection in one embodiment of the disclosure;
- Figure 9 is a flowchart that describes the main step of the combination/use of the symmetric axes/lines for estimating the position of the optical center, according to one embodiment of the disclosure;
- Figure 10 corresponds to a graph that details the relationship between percentage of used micro-images in the estimation method, and the estimation error (at focal length 8mm with the standard deviation of noise set as 0.1) of the position of the main lens optical center; and
- Figure 11 presents an example of device that can be used to perform one or several steps of methods disclosed in the present document.

Detailed description

The Figure 1 presents schematically the main components comprised in a plenoptic camera that enables the acquisition of light field data on which the present technique can be applied.

More precisely, a plenoptic camera comprises a main lens referenced 101, and a sensor array [i.e., an array of pixel sensors (for example a sensor based on CMOS technology)], referenced 104. Between the main lens 101 and the sensor array 104, a micro-lens array referenced 102, that comprises a set of micro-lenses referenced 103, is positioned. It should be noted that optionally some spacers might be located between the micro-lens array around each lens and the sensor to prevent light from one lens to overlap with the light of other lenses at the sensor side. In one embodiment, all the micro-lenses have the same focal. In another embodiment, the micro-lens can be classified into at least three groups of micro-lenses, each group being associated with a given focal, different for each group. Moreover, in a variant, the focal of a micro-lens is different from the ones positioned at its neighborhood; such configuration enables the enhancing of the plenoptic camera's depth of field. It should be noted that the main lens 101 can be a more complex optical system as the one depicted in Figure 1 (as for example the optical system described in Figures 12 and 13 of document GB2488905) Hence, a plenoptic camera can be viewed as a conventional camera plus a micro-lens array set just in front of the sensor as illustrated in Figure 1. The light rays passing through a micro-lens cover a part of the sensor array that records the radiance of these light rays. The recording by this part of the sensor defines a micro-lens image.

The Figure 2 presents an image captured by the sensor array 104. Indeed, in such view, it appears that the sensor array 104 comprises a set of pixels, referenced 201. The light rays passing through a micro-lens cover a number of pixels 201, and these pixels record the energy value of light rays that are incident/received.

Hence the sensor array 104 of a plenoptic camera records an image which comprises a collection of 2D small images (i.e. the micro-images referenced 202) arranged within a 2D image (which is also named a raw 4D light-field image). Indeed, each small image (i.e. the micro- images) is produced by a micro-lens (the micro-lens can be identified by coordinates (i, j) from the array of lens). Hence, the pixels of the light-field are associated with 4 coordinates (x, y, i, j). *L(x, y, i, j)* being the 4D light-field recorded by the sensor illustrates the image which is recorded by the sensor. Each micro-lens produces a micro-image represented by a circle (the shape of the small image depends on the shape of the micro-lenses which is typically circular). Pixel coordinates (in the sensor array) are labelled (x,y). *p* is the distance between two consecutive micro-images, p is not necessary an integer value. Micro-lenses are chosen such that *p* is larger than a pixel size $\delta$. Micro-images are referenced by their coordinates (i,j). Each micro- image samples the pupil of the main-lens with the (u,v) coordinate system. Some pixels might not receive any photons from any micro-lens especially if the shape of the micro-lenses is circular. In this case, the inter micro-lens space is masked out to prevent photons to pass outside from a micro-lens, resulting in some dark areas in the micro-images. If the micro-lenses have a square shape, no masking is needed. The vignetting of the optical system is another reason for which some pixels may not receive any photons. The center of a micro-image (i, j) is located on the sensor at the coordinates $(x_{i,j}, y_{i,j})$. 0 is the angle between the square lattice of pixel and the square lattice of micro-lenses, in Figure 2 $\theta$ = 0. Assuming the micro-lenses are arranged according to a regular square lattice, the $(x_{i,j}, y_{i,j})$ can be computed by the following equation considering $(x_{0,0}, y_{0,0})$ the pixel coordinates of the micro- image (0,0):

$$\begin{bmatrix} x_{i,j} \\ y_{i,j} \end{bmatrix} = p \begin{bmatrix} \cos\theta & -\sin\theta \\ \sin\theta & \cos\theta \end{bmatrix} \begin{bmatrix} i \\ j \end{bmatrix} + \begin{bmatrix} x_{0,0} \\ y_{0,0} \end{bmatrix}$$

Figure 2 also illustrates that an object point from the scene is visible on several contiguous micro- images (dark dots). In one embodiment, the distance between 2 consecutive views of an object is w, this distance is named the replication distance. Hence, an object is visible on r consecutive micro-images with:

$$r = \left\lfloor \frac{p}{|p - w|} \right\rfloor$$

r is the number of consecutive micro-images in one dimension. An object is visible in $r^2$ micro-images. Depending on the shape of the micro-lens image, some of the $r^2$ views of the object might be invisible.

More details related to plenoptic camera can be found out in the Section 4 entitled *"Image formation of a Light field camera"* in the article entitled *"The Light Field Camera: Extended Depth of Field, Aliasing, and Superresolution"* by Tom E. Bishop and Paolo Favaro, published in the IEEE Transactions on Pattern Analysis and Machine Intelligence, Vol. 34, N°5, in May 2012.

It should be noted that the present technique can also be applied on "conventional camera" (in the sense that no additional micro-lens array is positioned between the main lens and array of pixels), in the case that at least a part of the pixels of such conventional camera are designed in the same way (or similar way) as the one described in the document US2013258098**.** Indeed, document US2013258098 discloses a pixel that can record light field data due to the use of several light receiving sections (for example referenced 116 and 117 in document US2013258098**).** Hence, one skilled in the art could assimilate such conventional camera with an array of pixels integrating the technique of document US2013258098 as a kind of plenoptic camera as depicted in Figure 1, in which each micro-lens concentrates light rays on two pixels comprised in the sensor 104. It should be noted that technique of document US2013258098 can be generalized in the sense that a pixel can record more than two data information (obtained by the two low and high receiving sections), if more receiving section are integrated in the architecture of a pixel. The present disclosure can be used on raw images of "conventional camera" integrating pixels that can record light field data as mentioned previously. Indeed, these raw images can be assimilated to a set of micro-images.

It should also be noted that the present disclosure can also be applied to other devices that acquire 4D light field data such as devices that comprise coded aperture elements as depicted in document US 2010/0265386**,** or in the article entitled *"*Image and depth from a conventional camera with a coded aperture" by A. Levin a al., published in the proceedings of SIGGRAPH 2007, or use wavefront coding techniques as mentioned in the article entitled *"*Extended depth of field through wave-front coding" by Edward R. Dowski, Jr., and W. Thomas Cathe, published in Applied Optics, 1995 Apr 10.

The proposed technique relates to a method for obtaining/estimating a position of a main lens optical center of a plenoptic camera. In one embodiment of the disclosure, such technique uses a 4D raw light-field data of a white scene and a set of micro-images center $\left(c_x^k, c_y^k\right)$ as inputs. In one embodiment of the disclosure, only the micro-images located/positioned at the periphery of the 4D raw light-field data are used for performing the estimation of the position of the main lens optical center of the plenoptic camera.

It should be noted that we assume that the micro-images center $\left(c_x^k, c_y^k\right)$ associated with a micro-image $I_k$ is estimated by any technique of the state-of-the-art (as the one described in the article entitled "Decoding, calibration and rectification for lenselet-based plenoptic cameras" by Dansereau et al., published in the conference proceedings of Computer Vision and Pattern Recognition (CVPR), 2013 IEEE Conference on. IEEE).

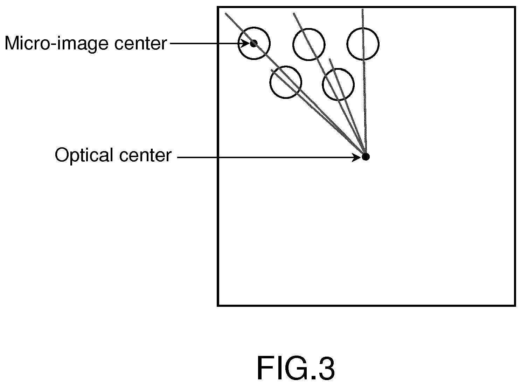

The proposed technique relies on the symmetry characteristics of micro-images for estimating the optical center. Indeed, each micro-image is reflection symmetric (i.e., symmetry with respect to the line connecting the micro-image center, and the optical center, as shown partially in Fig. 3), because micro-images result from the circular construction of the main-lens aperture and the micro-lens apertures. In theory, the intersection of two circles is reflection symmetric and the symmetry axis is the line passing through the centers of the corresponding circles. This is described in the book entitled "Computer Algebra and Geometric Algebra with Applications" 6th international workshop IWMM, pages 356-357, 2004. Then theoretically the symmetry axes of all the micro-images intersect at one point: the optical center.

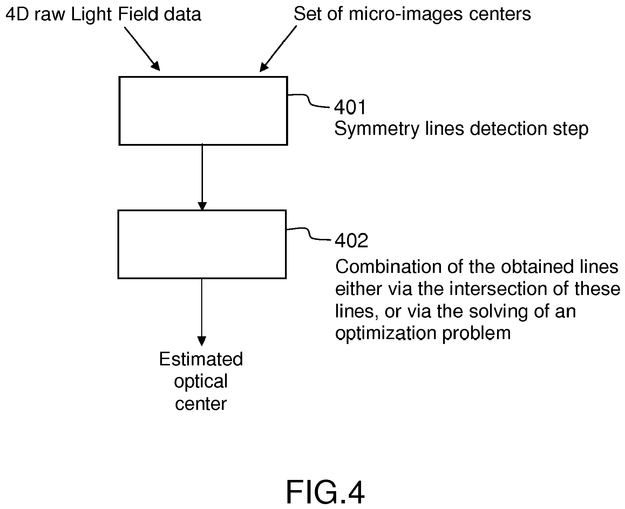

The Figure 4 is a flowchart that roughly depicts the main steps of the method for estimating the optical center position of a plenoptic camera according to one embodiment of the disclosure. In a step referenced 401, an electronic device obtains a 4D raw light-field data of a white scene (captured/generated by a plenoptic camera) and a set of micro-lens images center $\left(c_x^k, c_y^k\right)$. Such set can comprise all or only a part of micro-images center compared to the whole of micro-images comprised in the 4D raw light-field data. In one embodiment of the disclosure, the electronic device in the step 401 detects the symmetry axes/lines of all the micro-images and then, in a step referenced 402, computes their intersection point as the optical center. In a variant, only a part of the micro-images are used in the detecting step 401. In one embodiment of the disclosure, at least 25% of the micro-images are used in such detecting step 401. In another embodiment, only the micro-images positioned in the periphery of the 4D raw light-field data are used in the step 401. Indeed, due to the cat's eye vignetting that occur in the micro-images at the periphery of the 4D raw light-field data, it is easier to detect a symmetry for that kind of micro-images compared to the ones located around the center of the 4D raw light-field data (that can numerically have a lot of symmetry axis).

More generally, any line-symmetry detection method can be used to provide a trade-off between the complexity and the precision in the step 401. For example, in one embodiment of the disclosure, an interpolation-based method is used, where micro-images are interpolated to some scale and the reflection symmetry axes are determined using a designed method. This is computation-efficient, but the precision is limited, as the scale of interpolation is limited. In another embodiment, an optimization based method is used to further improve the precision. The details of both embodiments are detailed in the following. It should be noted that the effect of the Bayer pattern (in the 4D raw light-field data) is corrected before the symmetry detection is done. In one embodiment, pixel intensities are multiplied with known white balance gain parameters to consider the effect of the Bayer pattern.

In one embodiment of the disclosure, following the symmetry detection 401, the optical center is determined by computing 402 the intersection point of the determined symmetry axes. In practice, due to the accuracy of symmetry detection and contamination of noise and Bayer pattern, the detected symmetry axes may not intersect at one point. Therefore, in another embodiment of the disclosure, the optical center could be determined by determining a point that has the smallest total distance to all or a part of the symmetry axes/lines (that could also be weighted; for example, the symmetry axes/lines associated with the micro-images that are located at the periphery of the 4D raw light-field data could be considered as more relevant/important for the optimization process and therefore weighted more heavily than the ones from the center of the 4D raw light-field data).

It should be noted that, in one embodiment of the disclosure, once a set of symmetry axes/lines is obtained from step 401, and before executing the step 402, the electronic device can perform an elimination step that is aim to eliminate the symmetry axes/lines that have invalid direction. It should be noted that such elimination step can be also integrated into the step 401 for eliminating some symmetry lines associated with some micro-images.

Hence, in one embodiment of the disclosure, after a symmetry axis is detected for each micro-image (or a part of the micro-images), those symmetry axes with invalid directions are eliminated using the prior knowledge that the optical center resides in a circular neighborhood of the center of the raw image (i.e. the 4D raw light-field data) with a radius R > 0 of pixels (with R being equal for example to 40 pixels). If the distance from the image center to a determined symmetry axis is larger than R, then the symmetry axis is not taken into consideration when the final estimation of the optical axis is performed in step 402.

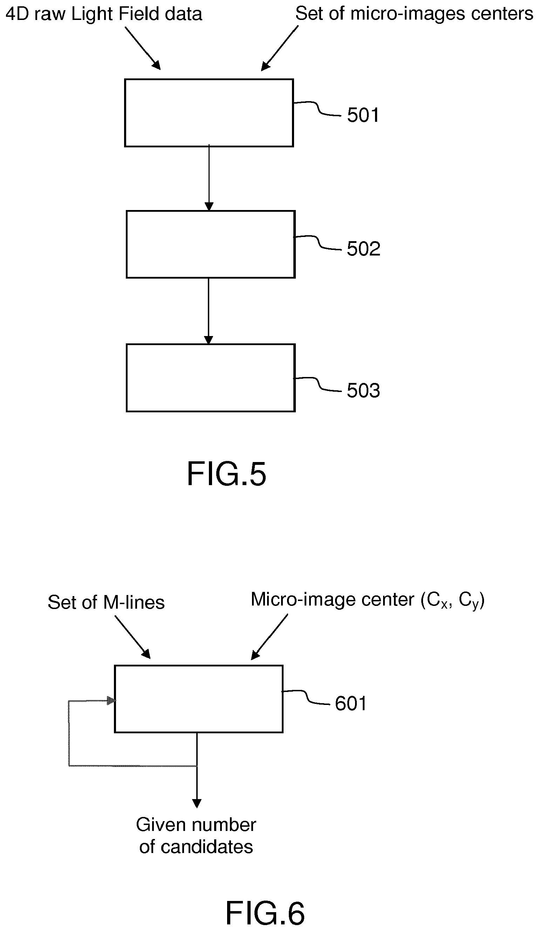

The Figure 5 emphasizes on the main steps of the detection step mentioned in Figure 4.

More precisely, in one embodiment of the disclosure, the step 401 determines for each micro-image $I_k$ or a selection of a set of micro-image $I_k$ comprised in the 4D raw light-field data (with the corresponding micro-image center coordinates $\left(c_x^k, c_y^k\right)$ available), the symmetry axis $I_k$ as follows:

In a step referenced 501, the electronic device determines a set of $N$ candidate symmetric axes/lines $\{l_n\}_{n=1}^{N}$ for a current micro-image. The symmetry axis should go through the brightest pixel in the micro-image (due to the radial symmetry of the circular main-lens and micro-lens) and the center of the micro-image. In practice, however, the brightest pixel in the micro-image might not be the actual brightest one due to noise and/or Bayer pattern. To circumvent this, it is proposed to determine the $M$ brightest pixels $\{p_m\}_{m=1}^{M}$ in the current micro image $I_k$ (by analyzing and comparing the different intensity values of the pixels comprised in the current micro-image). These M points $p_m$ are then used along with the micro-image center coordinates $\left(c_x^k, c_y^k\right)$ to form the corresponding $M$ candidate symmetry axes/lines. In one embodiment, we can have N which is equal to $M$.

In an optional step referenced 502, the electronic device interpolates the *(M-1)* lines obtained from step 501 in order to obtain $N$ *(N=2M-1)* candidate symmetry axes/lines $\{l_n\}_{n=1}^{N}$ that lie between the $M$ candidate lines for improving the estimation precision of the optical center. Details of the interpolation process are depicted in Figure 6.

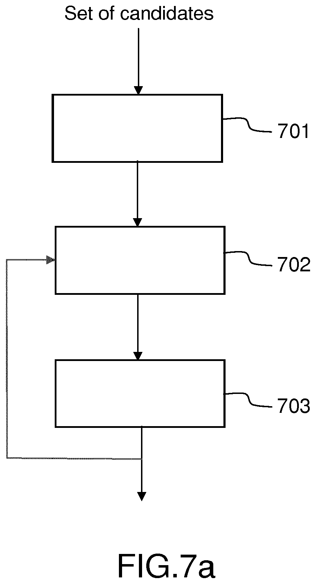

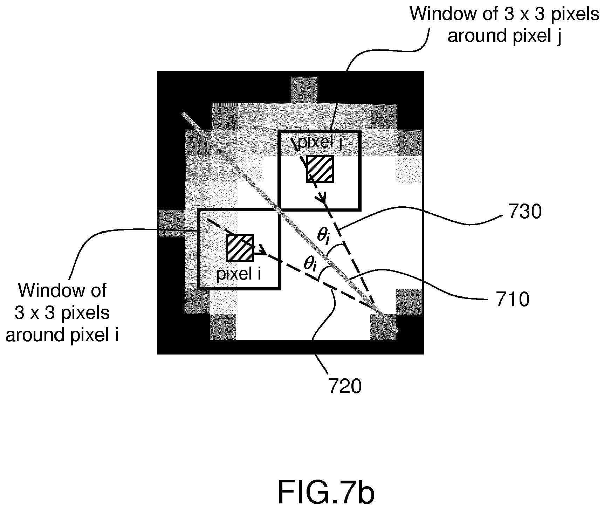

In a step referenced 503, for each candidate symmetry axis $l_n$ (among the *N=M* or *N=2M*-1 candidate lines depending on the execution of the step 502), the number of symmetric pixel pairs $s_n$ with regards to the line $l_n$ are determined. The symmetric pixel pairs are identified based on structure tensor, and sub-pixel accuracy is considered in the process for improved precision. Indeed, as it is crucial to identify symmetric pixel pairs correctly in order to measure candidate symmetry axes/lines, a robust algorithm based on structure tensor for the identification is proposed in one embodiment of this disclosure. Details of the determination of the number of symmetric pixel pairs for a given line are described in Figures 7(a) and 7(b). Then the candidate symmetry axis/line with the largest $s_n$ is determined as the symmetry axis of the micro-image $I_k$.

It should be noted that instead of using all the micro-images in the white image for symmetry detection, which is computationally expensive, only micro-images at the periphery of the white image can be used to reduce computation complexity with little effect on the accuracy of the final optical center estimation. This is because compared to micro-images in the center, symmetry detection is more accurate for micro-images at the periphery that are only reflection symmetric in terms of shape due to cat's eye vignetting.

The Figure 6 emphasizes the main steps of the interpolation step 502 mentioned in Figure 5.

At the output of step 501, the electronic device has determined a set of *N=M* candidate symmetry axes/lines. Each candidate symmetry axis $l_n$ is represented as $a_n x + b_n y + c_n = 0$. The parameters $a_m$, $b_m$, $c_m$ for candidate lines that connect $M$ brightest pixels $\{p_m\}_{m=1}^{M}$ and $\left(c_x^k, c_y^k\right)$ are computed as follows if $\{p_m\}_{m=1}^{M}$ have different x-coordinates from $c_x^k$ (i.e., $l_m$ is not vertical):

$$a_m = -\frac{c_y^k - y_{p_m}}{c_x^k - x_{p_m}},$$

$$b_m = 1,$$

$$c_m = -a_m c_x^k - b_m c_y^k.$$

Otherwise, $a_m$, $b_m$, $c_m$ are computed as follows:

$$a_m = 1, b_m = 0, c_m = -c_x^k.$$

In the case that an interpolation occurs, the electronic device determines, in a step referenced 601, interpolated lines, where an interpolated line $l_n$ that lies in for example between $l_{m-1}$ and $l_m$ has parameters that are determined as follows if $b_{m-1} \neq 0$ and $b_m \neq 0$:

$$a_n = \frac{a_{m-1}+a_m}{2},$$

$$b_n = 1,$$

$$c_n = -a_n c_x^k - b_n c_y^k.$$

Otherwise, $a_n = 2a_m$ if $b_{m-1} = 0$, and $a_n = 2a_{m-1}$ if $b_m = 0$. The computation of $b_n$ and $c_n$ remains the same.

The electronic device executes the step 601 until it has obtain a given number of candidate symmetry axes/lines. In one embodiment of the disclosure, such given number can be equal to *2M-1.*

The Figure 7(a) is a flowchart of the symmetric pixel pair identification from structure tensor used in one embodiment of the disclosure in step 501.

As micro-images may suffer from noise, it is not robust to identify symmetric pixel pairs just by their intensity values as mentioned in the description of step 501. In order to attenuate the effect of noise, in one embodiment a window around each pixel is considered to take neighboring pixels into consideration, and two pixels are determined as a symmetric pixel pair with regards to $l_n$ if the predominant gradient directions of the windows formed around them are symmetric with regards to the line $l_n$, as illustrated in Fig. 7(b). Indeed, Fig. 7(b) is an illustration of the construction of 3x3 windows around pixel i and *pixel j* respectively. The line referenced 710 is one candidate symmetry axis of the micro-image, and the lines referenced 720 and 730, with arrows represent the predominant gradient directions of the windows.

The predominant gradient direction of a window of pixels *l* is estimated by structure tensor. The structure tensor, also referred to as the second-moment matrix, is a matrix derived from the gradient of *l*. It summarizes the predominant directions of the gradient in *l*. The structure tensor matrix *T* for *l* is defined as follows:

$$T = \begin{bmatrix} I_x^2 & I_x I_y \\ I_x I_y & I_y^2 \end{bmatrix},$$

where $I_x$ and $I_y$ are the partial derivatives of *l* with regards to the x and y axes, respectively. *T* has two eigenvectors $v_1$, $v_2$, with corresponding eigenvalues $\gamma_1$, $\gamma_2$ sorted in descending order *(i.e., $\gamma_1 \geq \gamma_2$).* If $\gamma_1 > \gamma_2$, then $\varphi = v_1$ gives the predominant gradient direction. If $\gamma_1 = \gamma_2$, then *l* is isotropic *(e.g.,* constant) and thus there is no predominant gradient.

Having estimated the predominant direction $\varphi_i$ and $\varphi_j$ for each pixel pair *{i,j}* with coordinates symmetric with regards to $l_n$, the angle between the predominant directions and the direction of $l_n$ is then computed [$(\theta_i, \theta_j)$ for pixel pair {i,j}], as shown in Fig. 7(b). Pixels *i* and *j* contain symmetric intensity information with respect to $l_n$ if $\theta_i$, $\theta_j$ are close to each other in value, i.e.,

$$\left| \theta_i - \theta_j \right| < \varepsilon,$$

where $\varepsilon$ is a very small positive number.

In one embodiment of the disclosure, $\varepsilon$ is equal to 5 degrees.

Further, when pixel *i* with integer coordinates is considered, pixel *j* that is symmetric with pixel i with regards to $l_n$ might not have integer coordinates. It is proposed here that the corresponding intensities for the non-integer coordinates of all of the window pixels are calculated by means of bilinear interpolation.

Therefore, the electronic device for a given micro-image obtains as input a set of symmetry candidate lines.

Then, in a step referenced 701, the electronic device determines a window size to be used when processing the pixels in the micro-image. The window can have the shape of a square or a rectangular.

Then, for a given line, in a step referenced 702, the electronic device determines for each pair of symmetric pixels with regards to such given line the predominant gradient direction of the pair of windows pixels. It should be noted that, in one embodiment, the electronic determines the predominant gradient direction based on pair of symmetric points. Here a pair of corresponding points means two points whose coordinates are symmetric with respect to the given line. For each pixel p on one side of the line, the coordinate of its corresponding point q is computed according to the two equations on page 23 (and such point q is not necessary a pixel as the corresponding point of a pixel might be located at a subpixel position). Then the predominant gradient directions of the pixel patches centered at p and q respectively are computed.

Then, for the same given line, in a step referenced 703, the electronic device determines, for each pair of symmetric pixels/points, the difference between the angles (defined by the predominant direction and the given line). If the difference is below a threshold, a pair of symmetric pixels can be qualified as such, and therefore the value $s_n$ associated with the given line $l_n$ is incremented by one.

The step 702 and 703 are done for all the candidate lines.

It should be noted that, in the case that step 502 is done, while more interpolated candidate symmetry axes may lead to more accurate estimation of the optical center, it is uncertain how many lines need to be interpolated. Also, it is time-consuming to interpolate a large number of lines and compute the number of symmetric pixel pairs by structure tensor with bilinear interpolation of non-integer window coordinates.

Hence, in one embodiment, the step 401 that performs symmetry detection is formulated as an optimization problem so that the symmetry axis can be more efficiently detected directly by solving the optimization problem. The optimization-based symmetry detection algorithm corresponds to another embodiment of symmetry axes detection.

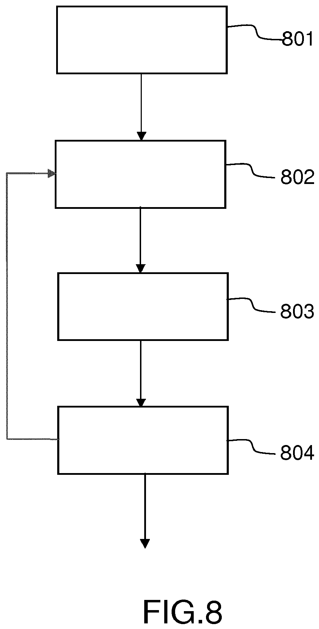

The Figure 8 is a flowchart that depicts the main step of the symmetry lines/axes detection in one embodiment of the disclosure.

In such embodiment, an optimization-based method for symmetry detection is designed in order to achieve even higher precision than the interpolation-based method described in Figure 5. The idea is to try to find the symmetry axis of a micro-image that has arbitrarily higher resolution than the captured micro-image. In particular, the optimization aims to:

1) find a high-resolution version $\hat{I}$ of the captured micro-image $I$, and

2) determine the symmetry axis $l(a, b, c)$ of the high-resolution micro-image $\hat{I}$, with the symmetry axis $l$ represented as $ax + by + c = 0$.

The objective is a weighted sum of

1) the data fidelity term meaning the squared difference between the observed micro-image $I$ and the sub-sampled instance of the high resolution image $\hat{I}$ where the operator $H$ performs the sub-sampling, and

2) a measure of symmetry of $\hat{I}$ with regards to the line $l(a, b, c)$, denoted by $E_{sym}(\hat{I}, l(a, b, c))$, where smaller value means more symmetric pixel pairs. Besides, in one embodiment, a constraint is added enforcing the distance d between the sensor center $C_o = (x_o, y_o)$ to be determined and $l(a, b, c)$ to be no larger than R pixels. Hence the problem is formulated as follows:

$$\min_{z,a,b,c} \left\| H\hat{I} - I \right\|_2^2 + \rho E_{sym}\left(\hat{I}, l(a,b,c)\right)$$

$$s.t. \quad d \le R$$

where $d = \dfrac{|ax_o + by_o + c|}{\sqrt{a^2 + b^2}}$

The symmetry function $E_{sym}(\hat{I}, l(a, b, c))$ is defined as the sum of squared difference between the intensity value of pixel coordinates $\mathbf{p} = (x_p, y_p)$ and $= (x_q, y_q)$, where $\mathbf{q}$ is the coordinate of the point that has the same distance to $l(a, b, c)$, and resides at the reflectionally symmetric coordinate with respect to $\mathbf{p}$). $\mathbf{q}$ is computed as follows:

$$x_q = x_p - \frac{2a(ax_p + by_p + c)}{a^2 + b^2},$$

$$y_q = y_p - \frac{2b(ax_p + by_p + c)}{a^2 + b^2}.$$

Then the symmetry function is

$$E_{sym}\big(\hat{I}, l(a, b, c)\big) = \sum_{p} (\hat{I}_p - \hat{I}_q)^2 .$$

In order to solve the optimization problem with two variable sets $\{\hat{I}\}$ and $\{a, b, c\}$, in one embodiment an alternating minimization algorithm is used to determine one variable set at a time while the other is fixed. Hence, the electronic device has to perform for each micro-image (or at least a part of selected micro-images) the following steps:

In a step referenced 801, the electronic device initializes $\hat{I}$ by upsampling $I$ by a scaling factor s using an interpolation method *(e.g.,* bilinear interpolation).

In a step referenced 802, the electronic device optimizes the corresponding {*a, b, c*} by applying an optimization method *(e.g.,* Kovesi's algorithm).

In a step referenced 803, the electronic device fixes the estimated {*a, b, c*} from the previous step, and update z by any optimization method *(e.g.,* quadratic programming).

In a step referenced 804, the electronic device executes the step 802 until a predefined level of convergence is reached. An example is when the data term becomes smaller than a predefined value.

Note that a larger scaling factor *s* leads to higher accuracy but more computation complexity. The choice of the scaling factor *s* depends on the accuracy and complexity requirement of a specific application.

In general, the algorithm converges within 5 iterations. Thus the computation complexity of this algorithm is less than 5 times of that of the previous interpolation-based method.

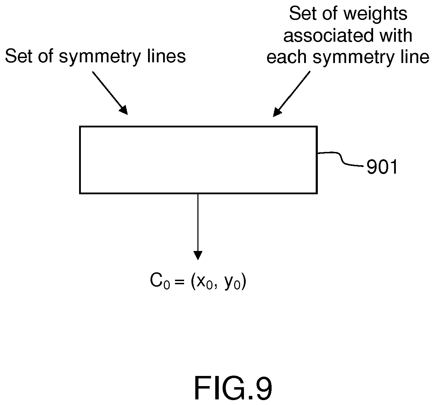

The Figure 9 is a flowchart that describes the main step of the combination/use of the symmetry axes/lines for estimating the position of the optical center.

In one embodiment of the disclosure, the electronic device obtains a set of symmetry lines/axes associated with a set of micro-images, and a set of weight values that are associated to each of the symmetry lines of the set of symmetry lines. Indeed, the weigh values aim at given more importance to some symmetry lines compared to others (for example, the symmetry lines from the micro-images positioned/ located at the periphery of the 4D raw Light Field data could be associated with weight values that are more important than the weight values associated with symmetry lines of micro-images located close to the center of the 4D raw Light Field data).

Then, in a step referenced 901, the electronic device solves an optimization problem that provides the estimation of the optical center.

Indeed, as discussed earlier, all the symmetry axes/lines are not guaranteed to intersect at one point. Hence, in one embodiment, the final optical center $C_o = (x_o, y_o)$ is determined by minimizing the sum of weighted distances between $C_o = (x_o, y_o)$ and each symmetry axis $l_k$, to find the most probable optical center, i.e.,

$$D = \sum_{k=1}^{K} w_k \frac{|a_k x_o + b_k y_o + c_k|}{\sqrt{a_k^2 + b_k^2}}$$

where $w_k$ is the weighting parameter for the k-th symmetry axis. In one embodiment, $w_k$ is large when the corresponding micro-image is at the periphery as its symmetry detection tends to be more accurate.

In practice, it is difficult to minimize D when it is defined as a function of the absolute values. In order to make the problem tractable, D is replaced by D', which is formulated as the sum of squared distance:

$$D' = \sum_{k=1}^{K} w_k \frac{(a_k x_o + b_k y_o + c_k)^2}{a_k^2 + b_k^2}$$

In order to minimize D' for estimation of $x_o$ and $y_o$, in one embodiment the partial derivatives of D' with respect to $x_o$ and $y_o$ are considered respectively and the derivatives are set to 0. This results in the following equation ($w_k$ is set to 1 for simplicity here):

$$
\begin{bmatrix}
\sum_k \dfrac{a_k^2}{a_k^2 + b_k^2} & \sum_k \dfrac{a_k b_k}{a_k^2 + b_k^2} \\
\sum_k \dfrac{a_k b_k}{a_k^2 + b_k^2} & \sum_k \dfrac{b_k^2}{a_k^2 + b_k^2}
\end{bmatrix}
\begin{bmatrix} x_o \\ y_o \end{bmatrix}
= -
\begin{bmatrix}
\sum_k \dfrac{a_k c_k}{a_k^2 + b_k^2} \\
\sum_k \dfrac{b_k c_k}{a_k^2 + b_k^2}
\end{bmatrix}
$$

Then in one embodiment, the electronic device obtains the value of ($x_o$, $y_o$) by solving the above equation, multiplying

$$
\begin{bmatrix}
\sum_k \dfrac{a_k^2}{a_k^2 + b_k^2} & \sum_k \dfrac{a_k b_k}{a_k^2 + b_k^2} \\
\sum_k \dfrac{a_k b_k}{a_k^2 + b_k^2} & \sum_k \dfrac{b_k^2}{a_k^2 + b_k^2}
\end{bmatrix} .
$$

both sides of the equation by the inverse matrix of the matrix

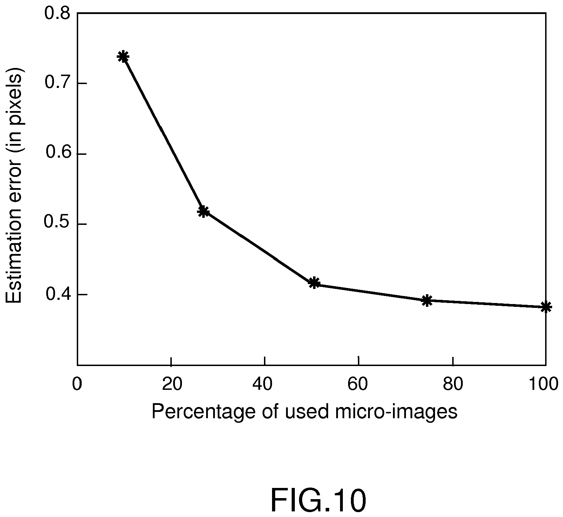

The Figure 10 corresponds to a graph that details the relationship between percentage of used micro-images in the estimation method, and the estimation error (at focal length 8mm with the standard deviation of noise set as 0.1) of the position of the main lens optical center.

It should be noted that for obtaining such graph, the micro-images are chosen from the periphery of the image, and then increased towards the center. The estimation error decreases as more micro-images are used, but the decreasing rate gets smaller. This means that more micro-images help improve the estimation accuracy, and the benefit is significant when around 50% of micro-images are used and gets smaller afterwards.

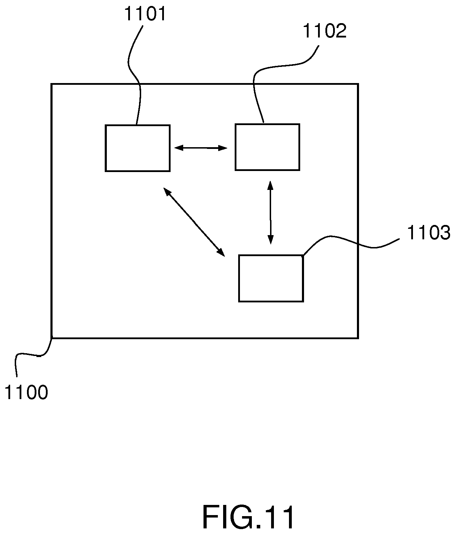

The Figure 11 presents an example of device that can be used to perform one or several steps of methods disclosed in the present document.

Such device referenced 1100 comprises a computing unit (for example a CPU, for "*Central Processing Unit"),* referenced 1101, and one or more memory units (for example a RAM (for *"Random Access Memory")* block in which intermediate results can be stored temporarily during the execution of instructions a computer program, or a ROM block in which, among other things, computer programs are stored, or an EEPROM *("Electrically-Erasable Programmable Read-Only Memory"*) block, or a flash block) referenced 1102. Computer programs are made of instructions that can be executed by the computing unit. Such device 1100 can also comprise a dedicated unit, referenced 1103, constituting an input-output interface to allow the device 1100 to communicate with other devices. In particular, this dedicated unit 1103 can be connected with an antenna (in order to perform communication without contacts), or with serial ports (to carry communications "contact"). It should be noted that the arrows in Figure 11 signify that the linked unit can exchange data through buses for example together.

In an alternative embodiment, some or all of the steps of the method previously described, can be implemented in hardware in a programmable FPGA ("*Field Programmable Gate Array")* component or ASIC ("*Application-Specific Integrated Circuit"*) component. One skilled in the art could implement some of all of the steps by applying the recommendations/techniques described in the document *"*Reconfigurable Computing: The Theory and Practice of FPGA-Based Computing" by S. Hauck and A. DeHon, Morgan Kaufmann, 2008, or in the document *"*Reconfigurable Computing: From FPGAs to Hardware/Software Codesign" by Cardoso, Joao M. P.; Hübner, Michael, published by Sringer in 2011.

In an alternative embodiment, some or all of the steps of the method previously described, can be executed on an electronic device comprising memory units and processing units as the one disclosed in the Figure 11.

In one embodiment of the disclosure, the electronic device depicted in Figure 11 can be comprised in a camera device that is configure to capture images (i.e. a sampling of a light field). These images are stored on one or more memory units. Hence, these images can be viewed as bit stream data (i.e. a sequence of bits). Obviously, a bit stream can also be converted on byte stream and vice versa.

In one embodiment of the disclosure, the information related to the position of the main lens optical center of a plenoptic camera, that is obtained via the proposed technique, is stored within a memory unit comprised in the plenoptic camera. Hence, in one embodiment of the disclosure, it is proposed a plenoptic camera comprising a memory unit that stores a position of the main lens optical center of a plenoptic camera. Hence, image processing techniques executed by the plenoptic camera can benefit from the use of the information related to the position of the main lens optical center of the plenoptic camera, by reading or accessing a memory unit.

**Claims**

1. A method for obtaining a position of a main lens optical center of a plenoptic camera comprising a micro-lens array (MLA) positioned in front of a sensor, said main lens optical center position being defined in a referential relative to said sensor, and said method being **characterized in that** it comprises:

- obtaining, from a 4D raw light-field data of a monochromatic scene, a set of symmetry axes, each symmetry axis of said set being defined as a line associated with a micro-image, said line passing in the neighborhood of the micro-image center coordinates of the micro-image it is associated with, and in the neighborhood of the brightest pixel in said micro-image it is associated with, said set comprising at least two symmetry axes;
- determining the position of the main lens optical center according to at least two symmetry axes of said set.

2. The method for obtaining according to claim 1, wherein said neighborhood of the micro-image center coordinates and said neighborhood of the brightest pixel are defined according to Euclidian distance metric and a threshold.

3. The method for obtaining according to any claims 1 to 2, wherein said line is passing through the micro-image center coordinates of the micro-image it is associated with, and through the brightest pixel in said micro-image it is associated with.

4. The method for obtaining according to any claims 1 to 3, wherein it comprises determining said set of symmetry axes, said determining comprising, for a given micro-image $I_k$ having micro-image center coordinates $\left(c_x^k, c_y^k\right)$:

- obtaining the **M-brightest** pixels $\{p_m\}_{m=1}^{M}$ comprised in $I_k$, $M$ being an integer greater than one;
- obtaining **M** lines, each line being defined as passing through one of said **M** brightest pixels and said micro-image center coordinates $\left(c_x^k, c_y^k\right)$;
- determining, for each of said $M$ lines, a number of symmetric pixel pairs $s_n$;
- adding in said set of symmetry axes, the line having the largest number of symmetric pixel pairs $s_n$ among the $M$ values of number of symmetric pixel pairs $s_n$.

5. The method for obtaining according to claim 4, wherein said determining, for each of said $M$ lines, is done for *2.M-1* lines, said *2.M-1* lines comprising said $M$ lines and *M-1* interpolated lines, an interpolated line passing through the micro-image center coordinates $\left(c_x^k, c_y^k\right)$ and a point comprised in said micro-image $I_k$, said point being further comprised in a region having for border two of said $M$ lines.

6. The method for obtaining according to any claims 4 to 5, wherein $M$ is greater than five.

7. The method for obtaining according to any claims 4 to 6, wherein said symmetric pixel pairs are identified according to the predominant gradient direction of pixels.

8. The method for obtaining according to claim 7, wherein said predominant gradient direction of pixels is obtained via the estimation of a structure tensor.

9. The method for obtaining according to any claims 4 to 8, wherein it comprises removing lines that are outside a circle centered on the center of the 4D raw light-field data, and having a radius $R$ of pixels, where $R$ is an integer smaller than 40.

10. The method for obtaining according to any claims 1 to 3, wherein it comprises determining said set of symmetry axes, said determining comprising, for a given micro-image $I_k$:

- applying an interpolation method on said micro-image $I_k$ delivering an high-resolution micro-image;
- determining line parameters *a, b, c* defining an equation line *ax + by + c* = 0 that minimize a sum of first and a second element, the first element being a square difference between said micro-image $I_k$ and sub-sampled said high-resolution micro-image, and the second element being a measure of symmetry of said high-resolution micro-image with regards to the line with parameters *a, b, c*.

11. The method for obtaining according to claim 10, wherein said determining, for a given micro-image $I_k$ further comprises verifying that a distance between the 4D raw light-field data center and said line with parameters *a, b, c* is no larger than R pixels.

12. The method for obtaining according to any claims 1 to 11, wherein said determining the position of the main lens optical center is done as a function of an intersection of at least a part of the symmetry axes of said set.

13. The method for obtaining according to any claims 1 to 11, wherein said determining the position of the main lens optical center is done by minimizing a weighted sum of distances between each of said symmetry axis and unknown main lens optical center coordinates $(x_o, y_o)$ of said plenoptic camera.

14. The method for obtaining according to any claims 1 to 13, wherein only micro-images positioned at the periphery of the 4D raw light-field data are used for obtaining said set of symmetry axes.

15. The method for obtaining according to any claims 1 to 13, wherein at least 25% of the micro-images comprised in the 4D raw light-field data are used for obtaining said set of symmetry axes.

16. The method for obtaining according to any claims 1 to 13, wherein all the micro-images comprised in the 4D raw light-field data are used for obtaining said set of symmetry axes.

17. A computer-readable and non-transient storage medium storing a computer program comprising a set of computer-executable instructions to implement a method for processing 4D raw light field data when the instructions are executed by a computer, wherein the instructions comprise instructions, which when executed, configure the computer to perform the method of claims 1 to 16.

18. An electronic device for obtaining a position of a main lens optical center of a plenoptic camera comprising a micro-lens array (MLA) positioned in front of a sensor, said main lens optical center position being defined in a referential relative to said sensor, said electronic device being **characterized in that** it comprises:

- a module configure to obtain, from a 4D raw light-field data of a monochromatic scene, a set of symmetry axes, each symmetry axis of said set being defined as a line associated with a micro-image, said line passing in the neighborhood of the micro-image center coordinates of the micro-image it is associated with, and in the neighborhood of the brightest pixel in said micro-image it is associated with, said set comprising at least two symmetry axes;
- a module configured to determine the position of the main lens optical center according to at least two symmetry axes of said set.

FIG.1

FIG.2

Micro-image center

Optical center

FIG.3

4D raw Light Field data          Set of micro-images centers

401
Symmetry lines detection step

402
Combination of the obtained lines
either via the intersection of these
lines, or via the solving of an
optimization problem

Estimated
optical
center

FIG.4

4D raw Light Field data          Set of micro-images centers

501

502

503

## FIG.5

Set of M-lines          Micro-image center ($C_x$, $C_y$)

601

Given number
of candidates

## FIG.6

Set of candidates

701

702

703

FIG.7a

FIG.7b

FIG.8

Set of symmetry lines

Set of weights
associated with
each symmetry line

901

$$C_0 = (x_0, y_0)$$

FIG.9

FIG.10

FIG.11

Europäisches
Patentamt

European
Patent Office

Office européen
des brevets

# EUROPEAN SEARCH REPORT

Application Number

EP 17 15 2334

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | SHIVARAM G ET AL: "A new technique for finding the optical center of cameras", IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 2, 4 October 1998 (1998-10-04), pages 167-171, XP010308613, DOI: 10.1109/ICIP.1998.723339 ISBN: 978-0-8186-8821-8 * page 169 * | 1-18 | INV. G06T5/50 G06T7/77 |
| A,P | N. ZELLER ET AL: "METRIC CALIBRATION OF A FOCUSED PLENOPTIC CAMERA BASED ON A 3D CALIBRATION TARGET", ISPRS ANNALS OF PHOTOGRAMMETRY, REMOTE SENSING AND SPATIAL INFORMATION SCIENCES, vol. III-3, 6 June 2016 (2016-06-06), pages 449-456, XP55400339, DOI: 10.5194/isprsannals-III-3-449-2016 * the whole document * | 1-18 | |
| | | | TECHNICAL FIELDS SEARCHED (IPC) G06T |

The present search report has been drawn up for all claims

| Place of search | Date of completion of the search | Examiner |
|---|---|---|
| Munich | 25 August 2017 | Rockinger, Oliver |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013180192 A
- GB 2488905 A
- US 2013127901 A
- US 2013258098 A
- US 20100265386 A

### Non-patent literature cited in the description

- **ANAT LEVIN et al.** Understanding camera trade-offs through a Bayesian analysis of light field projections. *conference proceedings of ECCV 2008*
- **REN NG.** *Digital Light Field Photography,* July 2006
- **S. WANNER et al.** Generating EPI Representation of a 4D Light Fields with a Single Lens Focused Plenoptic Camera. *conference proceedings of ISVC,* 2011
- **DONGHYEON CHO.** *Modeling the calibration pipeline of the Lytro camera for high puality light-field image reconstruction*
- **CHELSEA M. THOMASON.** *Calibration of a Microlens Array for a Plenoptic Camera*
- **GURUPRASAD SHIVARAM ; GUNA SEETHARA-MAN.** *New Technique for Finding the Optical Center of Cameras*
- **Y. ZHENG ; C. KAMBHAMETTU ; S. LIN.** Single-Image Optical Center Estimation from Vignetting and Tangential Gradient Symmetry. *proceedings of the IEEE Conference on Computer Vision and Pattern Recognition,* 2009, 2058-2065
- **ZHOU XUE.** *Light field panorama by a plenoptic camera*
- **C. K. LIANG ; R. RAMAMOORTHI.** A light transport framework for lenslet light field cameras. *ACM Transactions on Graphics,* February 2015, vol. 34 (2
- **TOM E. BISHOP ; PAOLO FAVARO.** The Light Field Camera: Extended Depth of Field, Aliasing, and Superresolution. *IEEE Transactions on Pattern Analysis and Machine Intelligence,* May 2012, vol. 34 (5
- **A. LEVIN.** Image and depth from a conventional camera with a coded aperture. *proceedings of SIGGRAPH,* 2007
- **EDWARD R. DOWSKI, JR. ; W. THOMAS CATHE.** Extended depth of field through wave-front coding. *Applied Optics,* 10 April 1995
- Decoding, calibration and rectification for lenselet-based plenoptic cameras. **DANSEREAU et al.** conference proceedings of Computer Vision and Pattern Recognition (CVPR), 2013 IEEE Conference. IEEE
- Computer Algebra and Geometric Algebra with Applications. *6th international workshop IWMM,* 2004, 356-357
- **S. HAUCK ; A. DEHON.** Reconfigurable Computing: The Theory and Practice of FPGA-Based Computing. Morgan Kaufmann, 2008
- **CARDOSO ; JOAO M. P. ; HÜBNER ; MICHAEL.** Reconfigurable Computing: From FPGAs to Hardware/Software Codesign. Sringer, 2011